# EUROPEAN PATENT SPECIFICATION

(11) **EP 1 964 619 B1**
(45) Date of publication and mention of the grant of the patent: **28.12.2016**
(21) Application number: 08075152.2
(22) Date of filing: 29.02.2008
(51) Int. Cl.: B08B 9/00, B08B 9/08, F16L 55/24, B01D 21/24

(54) **Dirt removal device**
Schmutzentfernungsvorrichtung
Dispositif d'élimination de salissures

(30) Priority: 02.03.2007 NL 1033480
(43) Date of publication of application: 03.09.2008
(73) Proprietor: FLAMCO B.V., NL-2802 AC Gouda (NL)
(72) Inventor: Cnossen, Jan Henk, 8723 CP Koudum (NL); Zaanen, Abraham, 2941 AP Lekkerkerk (NL)
(74) Representative: EP&C

(56) References cited:
- WO-A-2004/092305
- DE-C- 830 271
- JP-A- 7 136 421
- US-A- 1 526 197
- US-A- 4 179 762

## Description

The present invention relates to a dirt remover for a pipe system.

### Description of the prior art

In pipe systems such as those for heating purposes small dirt particles often find their way into the liquid, such as water, in the pipe. These dirt particles must be removed in order to keep the water in the system sufficiently clean. The dirt particles can be, for example, sand, residues from welding operations, metal particles (magnetite), paint particles, Teflon particles, sediment from the water itself and other dirt particles.

The dirt particles can lead to corrosion, pipe blockages and increased resistance in the pipes owing to a narrower throughflow opening or owing to rougher walls.

These problems can lead to inadequate functioning of the system.

Various ways of removing dirt particles are known in the prior art, one of them being filtration. A major disadvantage of filtration is that the filter used has to be cleaned or changed regularly. Examples of filtration devices are shown in JP A 07136421, DE 830271 and US4179762.

Another way of removing dirt is settling by reducing the flow rate of the liquid. A liquid which is moving slowly can hold fewer dirt particles in suspension than a liquid which is moving fast. A decrease in the flow rate of the liquid therefore leads to settlement of the dirt particles.

The liquid flow rate can be reduced by increasing the surface area flowed through and/or by placing obstacles in the flow path.

Known dirt removers make use of this principle. They generally comprise a collection area (or dirt collection chamber) where the dirt collects, and a discharge point, such as a tap, for removing the settled dirt from the dirt remover.

A problem of known dirt removers is that the dirt accumulates around the discharge point, and in doing so often adheres to the inside surface in the region of the discharge point. The dirt particles also cake together in this process. This means that when the discharge point is opened the dirt will be only partially discharged, or not discharged at all, through it.

In the course of time, a large part of the dirt remover will be filled with dirt, which reduces its functioning efficiency. The dirt remover can even become totally blocked after some time.

In that case the whole dirt remover has to be opened up in order to clean it, which can be very expensive.

A dirt remover in accordance with the preamble of claim 1 is disclosed in US1526197. This dirt remover has a loosening mechanism and a shaft located at the top of the vessel for operating the loosening mechanism.

### The invention

The object of the present invention is to eliminate at least one of the abovementioned disadvantages.

To that end, the invention provides a dirt remover for a pipe system in accordance with claim 1.

The loosening mechanism is therefore easy to operate by a user.

In an embodiment, the loosening mechanism is configured to loosen dirt in the region of the discharge mechanism. It is generally precisely in this area that the dirt becomes caked.

In one aspect of the invention the loosening mechanism is configured to loosen dirt by moving along or across the surface of the dirt remover on the inside. The movement along or across the surface is an efficient way of loosening the dirt.

The loosening mechanism is preferably rotatable. In a suitable embodiment the loosening mechanism can be moved around the discharge point, so that dirt around the discharge point can be loosened.

In one aspect of the invention at least a part of the discharge mechanism is movable, the loosening mechanism being connected to that part of the discharge mechanism, so that the loosening mechanism is movable by means of a movement of the movable part of the discharge mechanism. The movable part of the discharge mechanism preferably comprises the closing mechanism.

The loosening mechanism preferably comprises a scraper blade which is configured to scrape along the surface of the dirt remover.

Scraping is a very effective way of loosening the dirt from the inside surface of the dirt remover.

In one aspect of the invention a part of the inside surface of the dirt remover slopes towards the draining point, the loosening mechanism being movable along or across this part. In this embodiment the loosened dirt will move by itself towards the discharge point.

Further preferred embodiments of the device and method are described in the subclaims.

### Description of figures

The abovementioned and other aspects, features and advantages of the present invention will be explained in greater detail by the description following below of the method using the dirt remover according to the present invention on the basis of a preferred embodiment of a device for carrying out the method and with reference to the drawing, in which identical reference numerals indicate identical parts, and in which:
Figure 1 shows a diagrammatic cross section of a part of a dirt remover according to the prior art, with dirt in it;
Figure 2 shows a diagrammatic cross section of a part of a dirt remover according to the prior art, blocked by dirt;
Figure 3 shows a diagrammatic cross section of a part of a dirt remover according to the invention;
Figure 4 shows a view in perspective of a part of a dirt remover according to the invention;
Figure 5 shows a diagrammatic cross section of a dirt remover according to the invention;
Figure 6 shows a cross section of a discharge mechanism in a dirt remover according to the invention along the line B-B in Figure 7;
Figure 7 shows a side view of a discharge mechanism in a dirt remover according to the invention;
Figure 8 shows another side view of a discharge mechanism in a dirt remover according to the invention;
Figure 9 shows across section of a detail of Figure 6; and
Figure 10 shows a bottom view of a discharge mechanism in a dirt remover according to the invention.

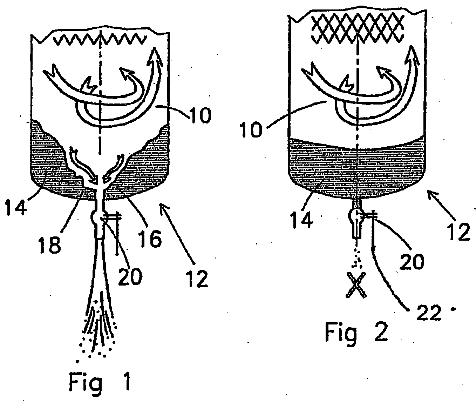

Figures 1 and 2 show a dirt collection chamber 10 of a dirt remover 12 according to the prior art. Dirt 14 collects in the dirt collection chamber 10, in particular near the underside 16 of said chamber, in the region 18 of a discharge mechanism 20 or discharge point.

The dirt 14 can completely block the dirt remover 12, as is shown in Figure 2. In that case the dirt remover 10 no longer functions when a discharge tap 22 of the discharge mechanism 20 is turned on.

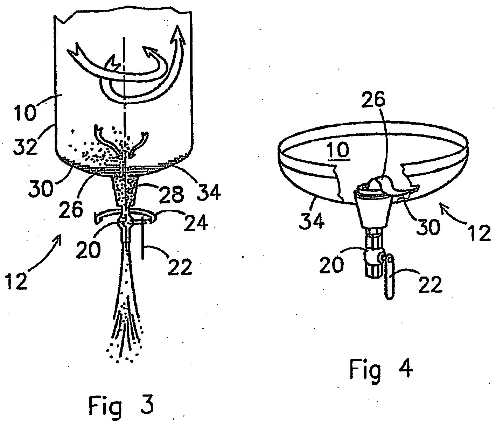

Figures 3 to 10 show the dirt remover 12 according to the invention. The dirt remover comprises a loosening mechanism 26, which is rotatable, as is indicated by arrow 24. The loosening mechanism 26 is connected by means of a connection 28 to the tap 22 of the discharge mechanism 20. The loosening mechanism 26 comprises an elongated scraper blade 30 which extends substantially parallel to the inside wall 32 of the dirt collection chamber 10, in particular extends parallel to its underside 34.

In operation, the loosening mechanism 26 will be rotated and will loosen the dirt 14 in this way. When the tap 22 is subsequently turned on, the dirt 14 will then be discharged from the dirt remover 12.

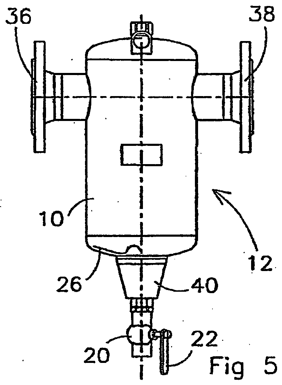

Figure 5 shows the dirt remover 12, which has an inlet 36 and an outlet 38, which make it possible to place the dirt remover in line in a pipe system (not shown), such as a pipe system for a central heating system. The dirt collection chamber 10 extends over a vertical distance, and near a bottom point of said chamber is a discharge point. The discharge point comprises a conical part 40, which is connected to the collection chamber 10.

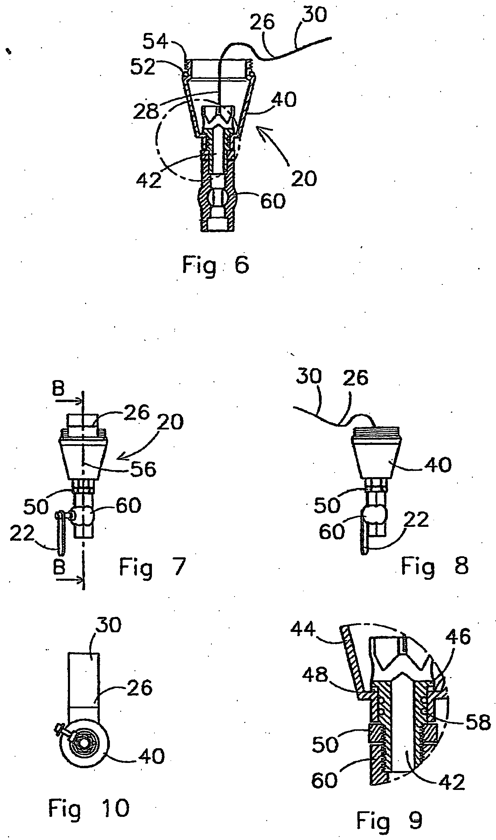

Figures 6, 7, 8 and 10 show the discharge mechanism 20, which defines a through discharge channel between the inside of the dirt collection chamber 10 and the outside. A tap 22 is provided for the purpose of opening or closing the discharge channel as desired.

The discharge mechanism 20 has a fixed part 44 and a rotatable part 46, which is immovably connected to the connecting element 28 and to the discharge tap 22.

The rotatable part 46 rests by means of a pivot ring 48 on the fixed part 44. An O-ring 58 is provided in order to form a liquid-tight connection between the fixed part 44 and the rotatable part 46.

The discharge mechanism 20 comprises a screw thread 54 for fixing on the dirt collection chamber 10 and an O-ring 52 for forming a liquid-tight connection with it.

The loosening mechanism 26 is of a certain length and, viewed from the top, extends radially from the axis 56 of the discharge channel 42.

A locking nut 50 is provided in order to form a fixed connection between a tap part 60 and the rotatable part 46.

The scope of protection of the invention is defined in the appended claims.

## Claims

1. Dirt remover (12) for a pipe system for a liquid, the dirt remover comprising:
- an inlet (36) and an outlet (38) for connecting the dirt remover to the pipe system;
- a dirt collection chamber (10) configured for settlement of dirt particles near the underside of said dirt collection chamber, wherein the dirt collection chamber has a discharge point near a bottom point of said dirt collection chamber,
- a discharge mechanism (20) at the discharge point for removing the settled dirt particles from the dirt collection chamber;
- a movable loosening mechanism (26) which is configured to loosen dirt present on the inside (32) of the dirt remover by the movement,
**characterized in that**
the discharge mechanism comprises a tap (22); and
the dirt remover comprises a control element located at the underside of said dirt collection chamber, wherein the control element is configured to move
the loosening mechanism(26) from outside the dirt remover.

2. Dirt remover according to claim 1, in which the loosening mechanism is configured to loosen dirt in the region of the discharge mechanism (20).

3. Dirt remover according to claim 1 or 2, in which the loosening mechanism is configured to loosen dirt by moving along or across the inner surface of the dirt collection chamber (10).

4. Dirt remover according to one of claims 1 - 3, in which the loosening mechanism (26) is rotatable.

5. Dirt remover according to one of claims 1 - 4, in which at least a part of the discharge mechanism (20) is movable, and in which the loosening mechanism (26) is connected to a movable part of the discharge mechanism, so that the loosening mechanism is movable by means of a movement of the movable part of the discharge mechanism (20).

6. Dirt remover according to claim 5, in which the movable part of the discharge mechanism (20) comprises the tap (22).

7. Dirt remover according to one of claims 1 - 6, in which the loosening mechanism comprises a scraper blade (30) which is configured to scrape along the surface of the dirt remover.

8. Dirt remover according to claim 1, in which a part of the inside surface (32) of the dirt remover slopes towards the discharge point, and in which the loosening mechanism is movable along or across this part.

## Patentansprüche

1. Schmutzentferner (12) für ein Rohrsystem für eine Flüssigkeit, wobei der Schmutzentferner das Folgende umfasst:
- einen Einlass (36) und einen Auslass (38), um den Schmutzentferner mit dem Rohrsystem zu verbinden;
- eine Schmutzsammelkammer (10), die für das Absetzen von Schmutzpartikeln nahe der Unterseite von der Schmutzsammelkammer konfiguriert ist, wobei die Schmutzsammelkammer nahe an einer untersten Stelle von der Schmutzsammelkammer eine Austrittsstelle aufweist,
- an der Austrittsstelle einen Austrittsmechanismus (20) zum Entfernen der abgesetzten Schmutzpartikel aus der Schmutzsammelkammer;
- einen beweglichen Lockerungsmechanismus (26), der konfiguriert ist, durch die Bewegung Schmutz zu lockern, der auf der Innenseite (32) des Schmutzentferners vorhanden ist,
**dadurch gekennzeichnet, dass**
der Austrittsmechanismus einen Hahn (22) und der Schmutzentferner ein Steuerelement umfasst, das an der Unterseite der Schmutzsammelkammer angeordnet ist, wobei das Steuerelement konfiguriert ist, den Lockerungsmechanismus (26) von der Außenseite des Schmutzentferners aus zu bewegen.

2. Schmutzentferner nach Anspruch 1, wobei der Lockerungsmechanismus konfiguriert ist, den Schmutz in der Region des Austrittsmechanismus (20) zu lockern.

3. Schmutzentferner nach Anspruch 1 oder 2, wobei der Lockerungsmechanismus konfiguriert ist, den Schmutz durch das Bewegen entlang oder über die Innenoberfläche von der Schmutzsammelkammer (10) zu lockern.

4. Schmutzentferner nach einem der Ansprüche 1 - 3, wobei der Lockerungsmechanismus (26) drehbar ist.

5. Schmutzentferner nach einem der Ansprüche 1 - 4, wobei mindestens ein Teil des Austrittsmechanismus (20) beweglich ist und wobei der Lockerungsmechanismus (26) mit einem beweglichen Teil von dem Austrittsmechanismus verbunden ist, so dass der Lockerungsmechanismus mittels einer Bewegung von dem beweglichen Teil des Austrittsmechanismus (20) bewegbar ist.

6. Schmutzentferner nach Anspruch 5, wobei der bewegliche Teil des Austrittsmechanismus (20) den Hahn (22) umfasst.

7. Schmutzentferner nach einem der Ansprüche 1 - 6, wobei der Lockerungsmechanismus eine Schaberklinge (30) umfasst, die konfiguriert ist, um an der Oberfläche des Schmutzentferners entlang zu schaben.

8. Schmutzentferner nach Anspruch 1, wobei ein Teil von der Innenoberfläche (32) des Schmutzentferners in Richtung der Austrittsstelle schräg ist und wobei der Lockerungsmechanismus entlang oder über diesen Teil bewegbar ist.

## Revendications

1. Dispositif d'élimination de salissures (12) pour un système de tuyaux pour un liquide, le dispositif d'élimination de salissures comprenant :
- une entrée (36) et une sortie (38) pour relier le dispositif d'élimination de salissures au système de tuyaux ;
- une chambre de collecte de salissures (10) configurée pour déposer des particules de salissures près du côté inférieur de ladite chambre de collecte de salissures, dans laquelle la chambre de collecte de salissures comporte un point de décharge à proximité d'un point bas de ladite chambre de collecte de salissures,
- un mécanisme de décharge (20) au point de décharge pour éliminer les particules de salissures déposées de la chambre de collecte de salissures ;
- un mécanisme de détachement mobile (26) qui est configuré pour détacher les salissures présentes sur la face intérieure (32) du dispositif d'élimination de salissures par déplacement,
**caractérisé en ce que** le mécanisme de décharge comprend un robinet (22) et le dispositif d'élimination de salissures comprend un élément de commande situé sur la face inférieure de ladite chambre de collecte de salissures, dans lequel l'élément de commande est configuré pour déplacer le mécanisme de détachement (26) depuis la face extérieure du dispositif d'élimination de salissures.

2. Dispositif d'élimination de salissures selon la revendication 1, dans lequel le mécanisme de détachement est configuré pour détacher les salissures dans la zone du mécanisme de décharge (20).

3. Dispositif d'élimination de salissures selon la revendication 1 ou 2, dans lequel le mécanisme de détachement est configuré pour détacher les salissures par déplacement le long ou sur la surface intérieure de la chambre de collecte de salissures (10).

4. Dispositif d'élimination de salissures selon l'une des revendications 1 à 3, dans lequel le mécanisme de détachement (26) est apte à tourner.

5. Dispositif d'élimination de salissures selon l'une des revendications 1 à 4, dans lequel au moins une partie du mécanisme de décharge (20) est mobile, et dans lequel le mécanisme de détachement (26) est relié à une partie mobile du dispositif de décharge de sorte que le mécanisme de détachement est mobile par déplacement de la partie mobile du mécanisme de décharge (20).

6. Dispositif d'élimination de salissures selon la revendication 5, dans lequel la partie mobile du mécanisme de décharge (20) comprend le robinet (22).

7. Dispositif d'élimination de salissures selon l'une des revendications 1 à 6, dans lequel le mécanisme de détachement comprend une lame de raclage (30) qui est configurée pour racler le long de la surface du dispositif d'élimination de salissures.

8. Dispositif d'élimination de salissures selon la revendication 1, dans lequel une partie de la surface intérieure (32) du dispositif d'élimination de salissures est inclinée vers le point de décharge, et dans lequel le mécanisme de détachement est mobile le long de cette partie ou sur cette partie.
